# EUROPEAN PATENT APPLICATION

(11) **EP 2 086 227 A2**
(43) Date of publication of application: **05.08.2009**
(21) Application number: 09000574.5
(22) Date of filing: 16.01.2009
(51) Int. Cl.: H04N 5/782

(54) **Method and apparatus for reserved recording**

(30) Priority: 01.02.2008 KR 20080010557
(71) Applicant: Topfield Co., Ltd., Bundang-gu Seongnam-si Gyeonggi-do 463-869 (KR)
(72) Inventor: Lee, Hyun-Chang, Seoul (KR)
(74) Representative: Jordan, Volker Otto Wilhelm

(57) **Abstract**

The method for reserved-recording includes: receiving recording information including information for at least one predetermined extra time and a set recording time (S200); calculating an actual recording start time and an actual recording time by adding the at least one predetermined extra time to the set recording time (S210), on the basis of the recording information, thus setting the actual recording start time and the actual recording time as information for reserved-recording (S230); and if it is determined according to the information for reserved-recording that the actual recording start time comes (S240), performing recording for the actual recording time (S250).

## Description

### CROSS-REFERENCE TO RELATED APPLICATION

This application claims the benefit under 35 U.S.C. §119(a) of Korean Patent Application No. 10-2008-0010557, filed on February 1, 2008, the disclosure of which is incorporated herein in its entirety by reference.

### BACKGROUND

### FIELD

The following description relates to a method and apparatus for recording digital broadcasting signals, and more particularly, to a technology for a reserved-recording.

### DESCRIPTION OF THE RELATED ART

Digital broadcasting is to compress and broadcast television signals in the form of digital signals. The digital broadcasting encodes image and sound signals to digital information, and encodes system information and program information according to a Program and System Information Protocol (PSIP) or Digital Video Broadcasting Specification for Service Information (DVB-SI) standard, thus transmitting the results of the encoding as a transport stream.

A digital broadcast receiver decodes image and sound streams from the transport stream, and displays the results of the decoding on a screen. Also, the digital broadcast receiver extracts information regarding broadcasting programs from the remaining data except for the image/sound information, displays the program-related information such as Electronic Program Guide (EPG) information on the screen to inform users of the program-related information, and stores it therein as a database.

The PSIP or DVB-SI standard defines EPG and system information. The PSIP standard is based on the Advanced System Television Committee (ASTC) method, and the DVB-SI standard is based on the DVB standard. The PSIP and DVB-SI standards have been defined to provide various information about programs by parsing messages encoded according to the MPEG-2 standard.

Meanwhile, a Hard Disk Drive (HDD) which is an auxiliary memory unit of a computer system has been widely utilized as a random access storage, since it allows random access, has a high transmission speed and can be mass-manufactured at low cost. A digital broadcast receiver having a HDD allows recording or reproducing of broadcast programs, and also allows time-shifting viewing of broadcast programs. The time-shifting operation is a series of process for processing broadcasting signals received in real time and continuing to record the processed broadcast signals in a HDD while reproducing broadcasting signals previously stored in the HDD.

Recently, a Personal Video Recorder (PVR) which can record broadcasting signals received through such a digital broadcast receiver is in the center of attention. By using a PVR, users can conveniently enjoy their desired broadcasting programs.

Upon reserved-recording, a user inputs the broadcast start and end times of a program which he or she wants to view, thus setting a recording time. In this case, if more or less changes in broadcast scheduling, delays in data transmission, etc. occur, a time difference of several seconds or several minutes between the recording time and broadcast time is generated. For example, although a program which a user wants to record is scheduled to be broadcasted from 2:00 to 2:50 PM, the actual broadcast time of the program may be from 2:02 to 2:52 PM or from 1: 59 to 2: 49 PM. In this case, if a digital broadcast receiver records only broadcast data received from 2:00 to 2: 50 PM, 1 minute belonging to the introduction part of the program or 2 minutes belonging to the final part of the program will not be recorded. Accordingly, the user cannot view the part of the program when reproducing the program.

### SUMMARY

The following description relates to a method and apparatus which can all record, without any missing, a program for which reserved-recording has been set.

According to an exemplary aspect, there is provided a reserved-recording method including: receiving recording information including information for at least one predetermined extra time and a set recording time; calculating an actual recording start time and an actual recording time by adding the at least one predetermined extra time to the set recording time, on the basis of the recording information, thus setting the actual recording start time and the actual recording time as information for reserved-recording; and if it is determined according to the information for reserved-recording that the actual recording start time comes, performing recording for the actual recording time.

The receiving of the recording information includes: receiving information about at least one program selected from Electronic Program Guide (EPG) information; and recognizing information for a start time of the at least one program and a broadcasting time of the at least one program from the information about the at least one program; and displaying, on a setting screen, the information for the start time and broadcasting time of the at least one program, and receiving information for a predetermined pre-extra time and a predetermined after-extra time from on the setting screen.

According to another exemplary aspect, there is provided an image recording apparatus including: a manipulating unit receiving recording information including information for at least one predetermined extra time and a set recording time; a broadcast receiver receiving a broadcast stream; a broadcast storage storing broadcast program information and the received broadcast stream; and a controller. The controller includes an information acquiring unit receiving the recording information from the manipulating unit; a calculating unit calculating an actual recording start time and an actual recording time and setting the actual recording start time and the actual recording time as reserved-recording information, by adding the at least one predetermined extra time to the set recording time on the basis of the received recording information; and a recording unit storing a broadcast stream received through the broadcast receiver in the broadcast storage during the actual recording time, and performing recording when the actual recording start time comes.

Therefore, users can all record, without any missing, a program for which reserved-recording has been set.

Also, since a recording time can be set using Electronic Program Guide (EPG) information or digital digits, users can conveniently use a user interface upon reserved-recording.

Additional aspects of the invention will be set forth in the description which follows, and in part will be apparent from the description, or may be learned by practice of the invention.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the aspects of the invention.
FIG. 1 is a block diagram of a video recording apparatus according to an embodiment; and
FIG. 2 is a flowchart of a reserved-recording method according to an embodiment.

### DETAILED DESCRIPTION OF EMBODIMENTS

The invention is described more fully hereinafter with reference to the accompanying drawings, in which exemplary embodiments of the invention are shown. This invention may, however, be embodied in many different forms and should not be construed as limited to the exemplary embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

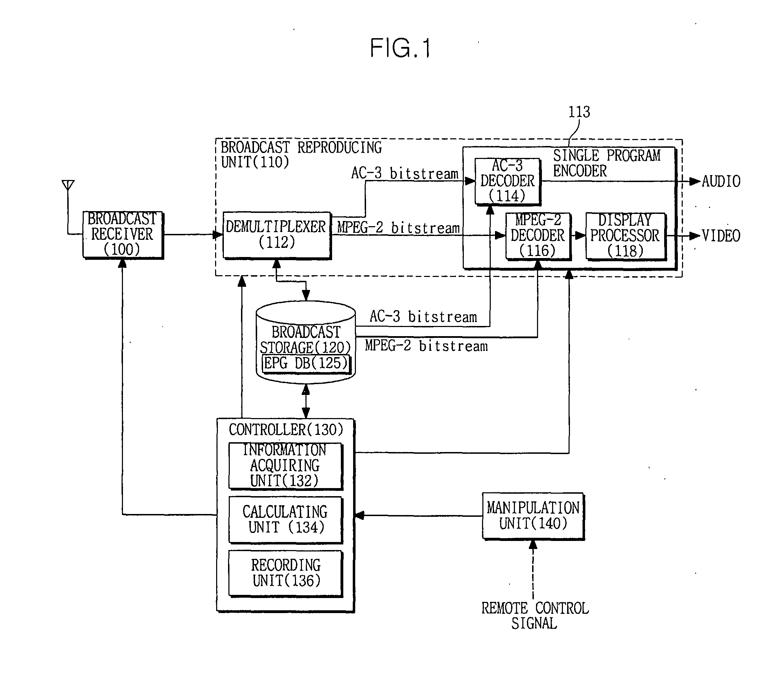

FIG. 1 is a block diagram of a video recording apparatus according to an embodiment, wherein the video recording apparatus may be a Personal Video Recorder (PVR).

Referring to FIG. 1, the video recording apparatus includes a manipulating unit 140, a broadcast receiver 100, a broadcast storage 120, a controller 130 and a broadcast reproducing unit 110.

The broadcast receiver 100 includes a tuner and a demodulator. The broadcast receiver 100 performs channel synchronization, and converts a received bitstream into a transport stream by demodulating the received bitstream in correspondence to a modulation method of the received bitstream in the modulator, under the control of the controller 130. The modulation method depends on a digital broadcasting method. For example, in the case of the Advanced Television Systems Committee (ATSC) method, it adopts an 8-level vestigial sideband (8-VSB) method, and in the case of the Digital Video Broadcasting (DVB) method, it adopts any one among the 8-level Phase-Shift Keying (8PSK), Quadrature Phase-Shift Keying (QPSK), Binary Phase-Shift Keying (BPSK), Quadrature Amplitude Modulation (QAM), and coded orthogonal frequency division multiplexing (COFDM). Accordingly, the broadcast receiver 100 can convert received broadcast signals into a transport steam TS by using a demodulator based on any one among the 8-VSB, QPSK, BPSK, QAM, and COFDM.

The broadcast reproducing unit 110 reproduces the transport stream TS received from the broadcast receiver 100. In detail, the broadcast reproducing unit 110 includes a demultiplexer 112 and an encoder 113.

The demultiplexer 112 divides the transport stream TS into a video bitstream and an audio bitstream. For example, in the case of the ATSC method, the demultiplexer 112 divides the transport stream TS into a Program and System Information Protocol (PSIP) section and a Program and System Information (PSI) section, and in the case of the DVB method, divides the transport stream TS into a DVB-SI section and a PSI section, thereby performing demultiplexing.

The PSI section, which is information defined in the MPEG standard, provides information about the specification of a program, that is, information about a program to be selected from among a plurality of programs, packets to be taken from the selected program, a method of decoding the packets, etc. The PSI section, and an electronic program guide (EPG) database 125 which is established by the PSIP or DVB-SI section are stored in the broadcast storage 120. A method of extracting EPG data from a transport stream, that is, techniques for PSIP analysis of the ATSC and for SI analysis of the DVB are well-known in the related art, and therefore detailed descriptions therefor will be omitted.

In the current embodiment, the video bitstream (that is, a MPEG-2 bitstream) and audio bitstream (that is, an AC-3 bitsteam) demultiplexed by the demultiplexer 112 are respectively input to a MPEG-2 decoder 116 and an AC-3 decoder 114, thus creating a transport stream required for digital broadcasting. This is because images have been encoded according to the MPEG-2 (ISO/IEC 13818-1) standard and sound has been encoded according to the AC3 (Dolby Digital Sound) standard. A digital image signal decoded by the MPEG-2 decoder 116 is converted into a display format by the display processor 118, and then output as an image signal. For the format conversion, the display processor 118 may include a NTSC/PAL encoder. The AC-3 decoder 114 decodes the audio bitstream (AC-3 bitstream) and outputs the result of the decoding as an audio signal. The image signal and audio signal are provided to a television which is a display device.

Also, the video bitstream (MPEG-2 bitstream) and audio bitstream (AC-3 bitstream) output from the demultiplexer 112 are stored in the format of a file in the broadcast storage 120, and the video bitstream (MPEG-2 bitstream) and audio bitstream (AC-3 bitstream) stored in the broadcast storage 120 are again read out and then are input respectively to the MPEG-2 decoder 116 and AC-3 decoder 114, under the control of the controller 130.

However, this processing depends on a method of implementing a system. For example, the demultiplexed transport stream output from the demultiplexer 112 is stored in the format of a file in the broadcast storage 120, the stored transport stream is again input to the demultiplexer 112 and demultiplexed by the demultiplexer 112, and then decoded and provided to a television, under the control of the controller 130. The example corresponds to the case when signals have been incompletely demultiplexed, and the processing can be applied in various ways according to system implementation. The broadcast storage 120 may be a hard disk (HDD).

The manipulation unit 140 receives a remote control signal which is a user manipulation signal transmitted from a remote controller, and decodes the remote control signal and transmits the decoded signal to the controller 130. However, the manipulation unit 140 is not limited to a remote controller, and may be a keypad integrated into the video recording apparatus.

The controller 130 controls the entire operation of the video recording apparatus. The controller 130 may include a memory in which control program data for controlling the video recording apparatus is stored. In detail, the controller 130 includes an information acquiring unit 132, a calculating unit 134, and a recording unit 136.

The information acquiring unit 134 acquires recording information including information regarding a predetermined extra time and information regarding a set recording time, from a user's manipulation through the manipulating unit 140. The information regarding the predetermined extra time includes an extra time (hereinafter, referred to as a pre-extra time) for before the start of a program to be recorded, and an extra time (hereinafter, referred to as an after-extra time) for after the termination of the program.

According to an embodiment, the information acquiring unit 134 acquires information about a program to be recorded, which is selected from EPG information displayed on a screen. If a user selects at least one program while viewing the EPG information displayed on the screen, the information acquiring unit 134 recognizes the broadcast start time and broadcasting time of the selected program on the basis of the EPG information. According to another embodiment, the information acquiring unit 134 receives information for a recording time, pre-extra time and after-extra time from a user's manipulation on the screen.

The calculating unit 134 calculates a time at which recording actually starts, and a time for which the program is actually recorded. In the current embodiment, the calculating unit 134 adds the pre- and after-extra times to the set recording time on the basis of the recording information acquired by the information acquiring unit 134, thereby obtaining the actual recording start time and the actual recording time. For example, if a pre-extra time set by a user through the manipulation unit 140 is 3 minutes, an after-extra time set by the user is 5 minutes, and a broadcasting time of a program that is to be recorded is scheduled from 2 to 3 o'clock, the calculating unit 134 calculates the actual recording start time as 1: 57 which is 3 minutes earlier than 2 o'clock.

Also, the calculating unit 134 calculates the actual recording time as a sum of the program broadcasting time, the pre-extra time and the after-extra time. That is, the calculating unit 134 calculates the actual recording time (1 hour 8 minutes) by summing the running time (1 hour) of the program, the pre-extra time (3 minutes) and the after-extra time (5 minutes). In other words, a running time of a program which a user wants to record is 1 hour, but an actual recording time calculated by the calculating unit 134 is 1 hour 8 minutes by adding the pre-extra time (3 minutes) and after-extra time (5 minutes) to the running time (1 hour).

The recording unit 136 stores the broadcast stream of the recording channel received through the broadcast receiver 100 according to information for the actual recording start time and actual recording time. The recording unit 136 starts recording of the program at the actual recording start time, and terminates the recording of the program when the actual recording time has elapsed.

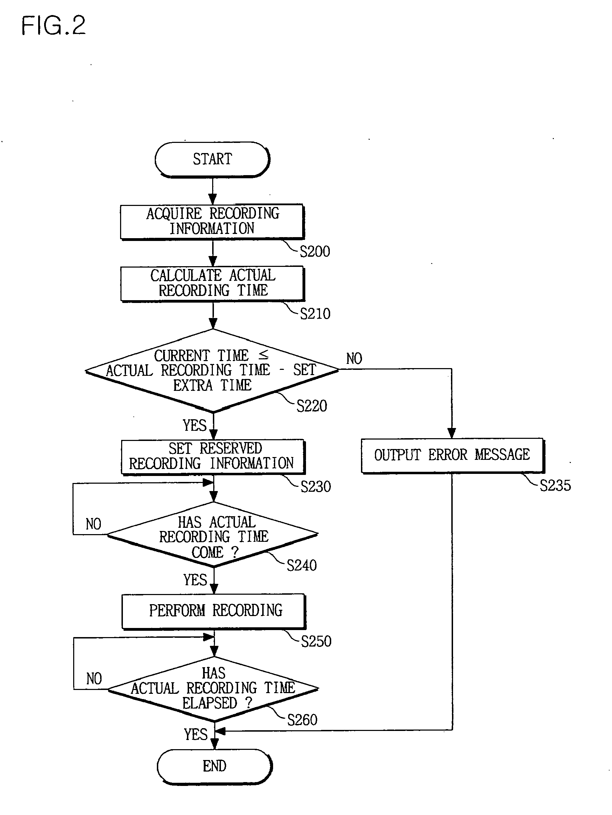

Hereinafter, a reserved-recording method according to an embodiment will be described with reference to FIG. 2. FIG. 2 is a flowchart of the reserved-recording method.

First, information for reserved-recording is acquired from a user (operation S200). At this time, recording information including predetermined extra times and recording time is received from the user. The information for the predetermined extra times includes a pre-extra time which is an extra time for before the start of a program, and an after-extra time which is an extra time for after the termination of the program. Then, information for a recording time is received from a user. The information for the recording time may be information about at least one program selected from among programs included in EPG information, or may be a digital value of digits input by a user.

According to an embodiment, if a user selects a program from among EPG information displayed on a screen, the broadcasting start time and broadcasting time of the selected program are displayed on the screen, and additionally, a screen for receiving information for extra times is displayed. Then, the user inputs information for pre- and after-extra times on the screen. According to another embodiment, a recording start time, recoding time, pre-extra time and after-extra time of a program are received in the form of digits from a user through a screen. If the broadcasting time of the program is from 2 to 3 o'clock, a set recording time of the program is 1 hour.

Then, an actual recording start time and actual recording time of the program are calculated on the basis of the received recording information (operation S210). The actual recording time is calculated as a sum of the broadcasting time of the program and the pre- and after-extra times. That is, if the pre-extra time is 3 minutes and the after-extra time is 5 minutes, the actual recording time becomes 1 hour 8 minutes which is a sum of the broadcasting time (1 hour) of the program, the pre-extra time (3 minutes) and the after-extra time (8 minutes). In other words, the broadcasting time of the program is 1 hour, but its actual recording time becomes 1 hour 8 minutes by adding the pre- and after-extra times to the broadcasting time.

Then, it is determined whether a time resulting from subtracting a setting time from the actual recording start time is later than a current time (operation S220). The setting time is a time required for user's settings upon reserved-recording, and can be arbitrarily modified by a user. The setting time is provided in case a pre-extra time is set too short. For example, a current time is 7:00, a time at which a user wants to record a program is 7:05, a pre-extra time is set to 3 minutes, and a setting time is set to 3 minutes, an actual recording start time is 7:02 and the actual recording start time 7:02 is changed to 6: 59 due to the setting time of 3 minutes. In this case, since it is determined according to the comparison result between the actual recording start time 6:59 and the current time 7:00 that the actual recording start time 6: 59 has been already elapsed, reserved-recording for the program cannot be set. In this case, an error message is output (operation S235).

Then, if it is determined in operation S220 that the current time is earlier than the actual recording start time, information for the actual recording start time and actual recording time is set as reserved-recording information (operation S230). Then, the actual recording start time is monitored on the basis of the set reserved-recording information (operation S240). Thereafter, when the actual recording start time comes, the received broadcast data of the program is recorded (operation S250). While the recording is performed, it is monitored whether the actual recording time has elapsed (operation S260). When the actual recording time has elapsed, the recording is terminated.

Meanwhile, the reserved-recording method described above may be written as a computer program. The computer program may be stored in any form of recording media, such as CD-ROM, RAM, ROM, floppy disk, hard disk, or magneto-optical disk, or in any computer-readable form, such as computer code organized into executable programs.

It will be apparent to those skilled in the art that various modifications and variations can be made in the present invention without departing from the spirit or scope of the invention. Thus, it is intended that the present invention covers the modifications and variations of this invention provided they come within the scope of the appended claims and their equivalents.

A method and apparatus for reserved-recording are provided. The method for reserved-recording includes: receiving recording information including information for at least one predetermined extra time and a set recording time; calculating an actual recording start time and an actual recording time by adding the at least one predetermined extra time to the set recording time, on the basis of the recording information, thus setting the actual recording start time and the actual recording time as information for reserved-recording; and if it is determined according to the information for reserved-recording that the actual recording start time comes, performing recording for the actual recording time. Therefore, it is possible to all record, without any missing, a program for which reserved-recording has been set.

## Claims

1. A reserved-recording method comprising:
receiving recording information including information for at least one predetermined extra time and a set recording time;
calculating an actual recording start time and an actual recording time by adding the at least one predetermined extra time to the set recording time, on the basis of the recording information, thus setting the actual recording start time and the actual recording time as information for reserved-recording; and
if it is determined according to the information for reserved-recording that the actual recording start time comes, performing recording for the actual recording time.

2. The reserved-recording method of claim 1, wherein the at least one predetermined extra time includes a pre-extra time which is an extra time for before the start of a program to be recorded, and an after-extra time which is an extra time for after the termination of the program.

3. The reserved-recording method of any one of claim 1 or 2, wherein the receiving of the recording information comprises:
receiving information about at least one program selected from Electronic Program Guide (EPG) information; and
recognizing information for a start time of the at least one program and a broadcasting time of the at least one program from the information about the at least one program; and
displaying, on a setting screen, the information for the start time and broadcasting time of the at least one program, and receiving information for a predetermined pre-extra time and a predetermined after-extra time from on the setting screen.

4. The reserved-recording method of any one of claim 1 or 2, wherein the receiving of the recording information comprises:
outputting a setting screen for setting the recording information; and
receiving information for a recording start time, a recording time, a pre-extra time, and an after-extra time in the form of digits from on the setting screen.

5. The reserved-recording method of any one of claim 1 or 2, after the receiving of the recording information, further comprising:
comparing a current time value to a value resulting from subtracting a setting time from the actual recording start time, wherein the setting time is an extra time for recording settings; and
if it is determined according to the result of the comparison that the current time value is larger than the value resulting from subtracting the setting time from the actual recording start time, outputting an error message.

6. An image recording apparatus comprising:
a manipulating unit receiving recording information including information for at least one predetermined extra time and a set recording time;
a broadcast receiver receiving a broadcast stream;
a broadcast storage storing broadcast program information and the received broadcast stream; and
a controller comprising:
an information acquiring unit receiving the recording information from the manipulating unit;
a calculating unit calculating an actual recording start time and an actual recording time and setting the actual recording start time and the actual recording time as reserved-recording information, by adding the at least one predetermined extra time to the set recording time on the basis of the received recording information; and
a recording unit storing a broadcast stream received through the broadcast receiver in the broadcast storage during the actual recording time, and performing recording when the actual recording start time comes.

7. The image recording apparatus of claim 6, wherein the information acquiring unit receives information about at least one program selected from Electronic Program Guide (EPG) information displayed on a screen, and
the calculating unit recognizes a set recording time from information for a start time and a broadcasting time of the at least one program, on the basis of the information about the at least one program.
